(19) Europäisches Patentamt
European Patent Office
Office européen des brevets

(11) **EP 2 664 948 B1**

(12) **EUROPEAN PATENT SPECIFICATION**

(45) Date of publication and mention
of the grant of the patent:
**03.05.2017 Bulletin 2017/18**

(51) Int Cl.:
**G02B 6/02** *(2006.01)*    **F21V 8/00** *(2006.01)*
**G02B 6/036** *(2006.01)*

(21) Application number: **13172106.0**

(22) Date of filing: **14.06.2013**

(54) **Modular optical fiber illumination systems**

Modulare faseroptische Beleuchtungssysteme

Systèmes d'éclairage à fibre optique modulaire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.05.2012 US 201261648666 P**

(43) Date of publication of application:
**20.11.2013 Bulletin 2013/47**

(73) Proprietor: **Corning Incorporated
Corning, NY 14831 (US)**

(72) Inventor: **Genier, Michael
New York NY New York 14845 (US)**

(74) Representative: **Greene, Simon Kenneth
Elkington and Fife LLP
Prospect House
8 Pembroke Road
Sevenoaks, Kent TN13 1XR (GB)**

(56) References cited:
**WO-A1-2011/063214    WO-A2-2010/011299**

## Description

### FIELD

The present disclosure relates generally to light-diffusing optical fibers having a region with nano-sized structures, and in particular to illumination systems and methods that employ such fibers for various applications.

### TECHNICAL BACKGROUND

Optical fibers are used for a variety of applications where light needs to be delivered from a light source to a remote location. Optical telecommunication systems, for example, rely on a network of optical fibers to transmit light from a service provider to system end-users.

Telecommunication optical fibers are designed to operate at near-infrared wavelengths in the range from 800 nm to 1675 nm where there are only relatively low levels of attenuation due to absorption and scattering. This allows most of the light injected into one end of the fiber to exit the opposite end of the fiber with only insubstantial amounts exiting peripherally through the sides of the fiber.

Recently, there has been a growing need to have optical fibers that are less sensitive to bending than conventional fibers. This is because more and more telecommunication systems are being deployed in configurations that require the optical fiber to be bent tightly. This need has lead to the development of optical fibers that utilize a ring of small non-periodically disposed voids that surround the core region. The void containing ring serves to increase the bend insensitivity-that is to say, the fiber can have a smaller bend radius without suffering a significant change in the attenuation (loss) of the optical signal passing through. In these fibers the void containing ring region is placed in the cladding of the optical fiber some distance from the core in order to minimize amount of light propagation through void containing ring region, since this could increase optical loss.

Because optical fibers are typically designed to efficiently deliver light from one end of the fiber to the other end of the fiber over long distances, very little light escapes from the sides of the typical fiber, and, therefore optical fibers are not considered to be well-suited for use in forming an extended illumination source. Yet, there are a number of illumination system applications where select amounts of light, often at specific wavelengths, need to be provided in an efficient manner to specified areas, desirably by means of an illumination system that is easily assembled and easily repaired.

WO2010/011299 teaches an optical fiber illumination system using a nanostructured optical fiber. WO2011/063214 teaches a side-emitting optical fiber using nano-sized structures.

## SUMMARY

According to some embodiments, a first aspect of the disclosure is a modular optical-fiber-based illumination system that comprises a light source, a low-scatter light-conducting optical fiber optically coupled to the light source and having an output end, and a light-diffusing optical fiber having a glass core, a cladding, and a plurality of nano-sized structures situated within said core or at a core-cladding boundary. An input end of the light-diffusing optical fiber is removably and optically coupled to the output end of the low-scatter light-conducting optical fiber. The light source may provide light only in UV wavelengths, and the light-diffusing optical fiber may have one or more phosphors for converting UV into one or more other wavelengths, such as one or more colors of visible light, and the illumination system may include a filter or absorber that prevents or reduces propagation of said one or more other wavelengths.

A number of advantages arise because the light-diffusing optical fiber is removably coupled to the low-scatter light-conducting optical fiber. The illumination system may be repaired by switching out the light-diffusing optical fiber. The illumination system may also be upgraded or varied over time by changing out a light-diffusing optical fiber having phosphors that produce one wavelength or combination of wavelengths for one having phosphors that produce another wavelength or combination of wavelengths. Further, the location of the "switchbox" for a repair or upgrade or variation of this type may be selected to be at a position relatively far from the location at which the light is initially generated. Far, in other words, from a location at which electrical power is required, heat is generated, moisture is unwelcome, and so forth. Thus the interchangeable or repairable part of the system can be robust against moisture and can be located where electrical power supply is not practical and where heat sources are to be avoided, while the actual location at which energy is supplied to the system can be relatively far distant, isolated from physical and electrical disruption and away from components or from areas (or persons) sensitive to heat.

Light sources useful in the illumination systems of the present disclosure include visible light sources such as sources of white or colored light, particularly for lighting applications. Infrared sources may also be empoloyed, particularly for illumination used for signaling, sensing, or detection, for example. UV light sources may also be used for various applications, and in cooperation with phosphors in or on the light-diffusing fiber, almost any desired wavelength of illumination can then be produced.

According to some further embodiments, a second light-diffusing optical fiber may be optically coupled to the first light-diffusing optical fiber, either directly or through intervening optics such as through a low-scatter light-conducting optical fiber. This allows delivery of illumination at multiple spaced apart locations, and in the case where the light source is UV and the light-diffusing fibers include phosphors, allows delivery of different wavelengths or colors at the different locations, as desired. According to some yet further embodiments, filters or absorbers are used to prevent or limit the propagation along the fibers of other light wavelengths generated by the phosphors of the respective light-diffusing optical fibers. This provides reliable delivery of the desired wavelengths at the desired locations without intermingling of colors or wavelengths from elsewhere in the system.

It is to be understood that both the foregoing general description and the following detailed description represent embodiments of the disclosure, and are intended to provide an overview or framework for understanding the nature and character of the disclosure as it is claimed. The accompanying drawings are included to provide a further understanding of the disclosure, and are incorporated into and constitute a part of this specification. The drawings illustrate various embodiments of the disclosure and together with the description serve to explain the principles and operations of the disclosure.

Additional features and advantages of the disclosure will be set forth in the detailed description which follows, and in part will be readily apparent to those skilled in the art from that description or recognized by practicing the disclosure as described herein, including the detailed description which follows, the claims, as well as the appended drawings. The claims are incorporated into and constitute part of the Detailed Description set forth below.

## BRIEF DESCRIPTION OF THE DRAWINGS

FIG. 1 is a schematic side view of a section of an example embodiment of light-diffusing optical fiber;

FIG. 2 is a schematic cross-section of the optical fiber of FIG. 1 as viewed along the direction 2-2;

FIG. 3A is a schematic illustration of relative refractive index plot versus fiber radius for an exemplary embodiment of light-diffusing optical fiber;

FIG. 3B is a schematic illustration of relative refractive index plot versus fiber radius for another exemplary embodiment of light-diffusing optical fiber;

FIG. 3C is illustrates an exemplary configuration of the glass core of the light-diffusing optical fiber;

FIGS. 4A and 4B depict fiber attenuation (loss) in dB/m versus wavelength (nm);

FIG. 5 is a diagram of an illumination system utilizing at least one light-diffusing optical fiber 12;

FIG 6 is an alternative system an illumination system utilizing at least one light-diffusing optical fiber 12;

FIG. 7 is yet another alternative system an illumination system utilizing at least one light-diffusing optical fiber 12;

FIG. 8 is still another alternative illumination system utilizing at least one light-diffusing optical fiber 12;

FIG. 9 is diagrammatic close-up view of a sculpted tip on a fiber useful in some examples;

FIG. 10 is an alternative example of a free space coupling;

FIG. 11 is an embodiment of a system an illumination system utilizing at least one light-diffusing optical fiber 12;

FIG. 12 is a diagram of a lens embodiment having a filter coating useful with some embodiment(s) in the present disclosure; and

FIG. 13 is an alternative embodiment of a filter useful with some embodiments of the present disclosure.

Additional features and advantages of the disclosure will be set forth in the detailed description which follows and will be apparent to those skilled in the art from the description or recognized by practicing the disclosure as described in the following description together with the claims and appended drawings.

## DETAILED DESCRIPTION

Reference is now made in detail to the present preferred embodiments of the disclosure, examples of which are illustrated in the accompanying drawings. Whenever possible, like or similar reference numerals are used throughout the drawings to refer to like or similar parts. It should be understood that the embodiments disclosed herein are merely examples, each incorporating certain benefits of the present disclosure.

Various modifications and alterations may be made to the following examples within the scope of the present disclosure, and aspects of the different examples may be mixed in different ways to achieve yet further examples. Accordingly, the true scope of the disclosure is to be understood from the entirety of the present disclosure, in view of but not limited to the embodiments described herein.

### Definitions

Terms such as "horizontal," "vertical," "front," "back," etc., and the use of Cartesian Coordinates are for the sake of reference in the drawings and for ease of description and are not intended to be strictly limiting either in the description or in the claims as to an absolute orientation and/or direction.

In the description of the disclosure below, the following terms and phrases are used in connection to light-diffusing optical fibers having nano-sized structures.

The "refractive index profile" is the relationship between the refractive index or the relative refractive index and the waveguide (fiber) radius.

The "relative refractive index percent" is defined as

$$\Delta(r)\% = 100 \times [n(r)^2 - n_{REF}^2)]/2n(r)^2,$$

where $n(r)$ is the refractive index at radius r, unless otherwise specified. The relative refractive index percent is defined at 850 nm unless otherwise specified. In one aspect, the reference index $n_{REF}$ is silica glass with the refractive index of 1.452498 at 850 nm, in another aspect is the maximum refractive index of the cladding glass at 850 nm. As used herein, the relative refractive index is represented by $\Delta$ and its values are given in units of "%", unless otherwise specified. In cases where the refractive index of a region is less than the reference index $n_{REF}$, the relative index percent is negative and is referred to as having a depressed region or depressed-index, and the minimum relative refractive index is calculated at the point at which the relative index is most negative unless otherwise specified. In cases where the refractive index of a region is greater than the reference index $n_{REF}$, the relative index percent is positive and the region can be said to be raised or to have a positive index.

An "updopant" is herein considered to be a dopant which has a propensity to raise the refractive index relative to pure undoped $SiO_2$. A "downdopant" is herein considered to be a dopant which has a propensity to lower the refractive index relative to pure undoped $SiO_2$. An updopant may be present in a region of an optical fiber having a negative relative refractive index when accompanied by one or more other dopants which are not updopants. Likewise, one or more other dopants which are not updopants may be present in a region of an optical fiber having a positive relative refractive index. A downdopant may be present in a region of an optical fiber having a positive relative refractive index when accompanied by one or more other dopants which are not downdopants.

Likewise, one or more other dopants which are not downdopants may be present in a region of an optical fiber having a negative relative refractive index.

The term "$\alpha$-profile" or "alpha profile" refers to a relative refractive index profile, expressed in terms of $\Delta(r)$ which is in units of "%", where r is radius, which follows the equation,

$$\Delta(r) = \Delta(r_o)(1 - [|r - r_o| / (r_1 - r_o)]^{\alpha}),$$

where $r_o$ is the point at which $\Delta(r)$ is maximum, $r_1$ is the point at which $\Delta(r)\%$ is zero, and r is in the range $r_i \leq r \leq r_f$, where $\Delta$ is defined above, $r_i$ is the initial point of the $\alpha$-profile, $r_f$ is the final point of the $\alpha$-profile, and $\alpha$ is an exponent which is a real number.

As used herein, the term "parabolic" therefore includes substantially parabolically shaped refractive index profiles which may vary slightly from an $\alpha$ value of 2.0 at one or more points in the core, as well as profiles with minor variations and/or a centerline dip. In some exemplary embodiments, $\square$ is greater than 1.5 and less than 2.5, more preferably greater than 1.7 and 2.3 and even more preferably between 1.8 and 2.3 as measured at 850 nm. In other embodiments, one or more segments of the refractive index profile have a substantially step index shape with an $\alpha$ value greater than 8, more preferably greater than 10 even more preferably greater than 20 as measured at 850 nm.

The term "nano-structured fiber region" describes the fiber having a region or area with a large number (greater than 50) of gas filled voids, or other nano-sized structures, e.g., more than 50, more than 100, or more than 200 voids in the cross-section of the fiber. The gas filled voids may contain, for example, $SO_2$, Kr, Ar, $CO_2$, $N_2$, $O_2$, or mixture thereof. The cross-sectional size (e.g., diameter) of nano-sized structures (e.g., voids) as described herein may vary from 10 nm to 1 $\mu$m (for example, 50 nm-500 nm), and the length may vary from 1 millimeter to 50 meters (e.g., 2 mm to 5 meters, or 5 mm to 1 m range).

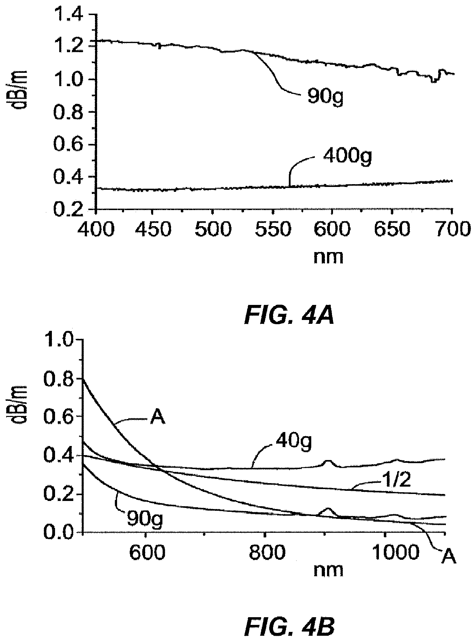

In standard single mode or multimode optical fibers, the losses at wavelengths less than 1300 nm are dominated by Rayleigh scattering. These Rayleigh scattering loss Ls is determined by the properties of the material and are typically about 20 dB/km for visible wavelengths (400-700 nm). Rayleigh scattering losses also have a strong wavelength dependence (i.e., $L_S \propto 1/\lambda^4$, see **FIG 4B**, comparative fiber A), which means that at least about 1 km to 2 km of the fiber is needed to dissipate more than 95% of the input light. Shorter lengths of such fiber would result in lower illumination efficiency, while using long lengths (1 km to 2 km, or more) can be more costly and can be difficult to manage. Such long lengths of fiber may be cumbersome in an illumination system.

In certain configurations of lighting applications it is desirable to use shorter lengths of fiber, for example, 1-100 meters. This requires an increase of scattering loss from the fiber, while being able to maintain good angular scattering properties (uniform dissipation of light away from the axis of the fiber) and good bending performance to avoid bright spots at fiber bends. A desirable attribute of at least some of the embodiments of present disclosure described herein is uniform and high illumination along the length of the fiber illuminator. Because the optical fiber is flexible, it allows a wide variety of the illumination shapes to be deployed. It is preferable to have no bright spots (due to elevated bend losses) at the bending points of the fiber, such that the illumination provided by the fiber does not vary by more than 30%, preferably less than 20% and more preferably less than 10%. For example, in at least some embodiments, the average scattering loss of the fiber is greater than 50 dB/km, and the scattering loss does not vary more than 30% (i.e., the scattering loss is within ±30% of the average scattering loss) over any given fiber segment of 0.2 m length. According to at least some embodiments, the average scattering loss of the fiber is greater than 50 dB/km, and the scattering loss does not vary more than 30% over the fiber segments of less than 0.05 m length. According to at least some embodiments, the average scattering loss of the fiber is greater than 50 dB/km, and the scattering loss does not vary more than 30% (i.e., ±30%) over the fiber segments 0.01 m length. According to at least some embodiments, the average scattering loss of the fiber is greater than 50 dB/km, and the scattering loss does not vary more than 20%(i.e., ±20%) and preferably by not more than 10% (i.e., ±10%) over the fiber segments 0.01 m length.

In at least some embodiments, the intensity variation of the integrated (diffused) light intensity coming through sides of the fiber at the illumination wavelength is less than 30% for a target length of the fiber, which can be, for example, a 0.02 to 100 m length. It is noted that the intensity of light through sides of the fiber at a specified illumination wavelength can be varied by incorporating fluorescence material in or on the cladding or coating. The wavelength of the light scattering by the fluorescent material is different from the wavelength of the light propagating in the fiber.

In some the following exemplary embodiments we describe fiber designs with a nano-structured fiber region (region with nano-sized structures) placed in the core area of the fiber, or very close to core. Some of the fiber embodiments have scattering losses in excess of 50 dB/km (for example, greater than 100 dB/km, greater than 200 dB/km, greater than 500 dB/km, greater than 1000 dB/km, greater than 3000 dB/km, greater than 5000 dB/km), the scattering loss (and thus illumination, or light radiated by these fibers) is uniform in angular space.

In order to reduce or to eliminate bright spots as bends in the fiber, it is desirable that the increase in attenuation at a 90° bend in the fiber is less than 5 dB/turn (for example, less than 3 dB/turn, less than 2 dB/turn, less than 1 dB/turn) when the bend diameter is less than 50 mm. In exemplary embodiment, these low bend losses are achieved at even smaller bend diameters, for example, less than 20 mm, less than 10 mm, and even less than 5 mm. Preferably, the total increase in attenuation is less than 1dB per 90 degree turn at a bend radius of 5 mm.

Preferably, according to some embodiments, the bending loss is equal to or is lower than intrinsic scattering loss from the core of the straight fiber. The intrinsic scattering is predominantly due to scattering from the nano-sized structures. Thus, according to at least the bend insensitive embodiments of optical fiber, the bend loss does not exceed the intrinsic scattering for the fiber. However, because the scattering level is a function of bending diameter, the bending deployment of the fiber depends on its scattering level. For example, in some of the embodiments, the fiber has a bend loss less than 3 dB/turn, preferably less than 2 dB/turn, and the fiber can be bent in an arc with a radius as small as 5 mm radius without forming bright spots.

Also, in the description below, in some embodiments where it is said that scattered actinic light is provided or delivered throughout a photoreactive material, the scattered actinic light is assumed to have sufficient intensity to perform a photoreaction on the photoreactive material in a reasonable period of time.

## Light-diffusing optical fiber

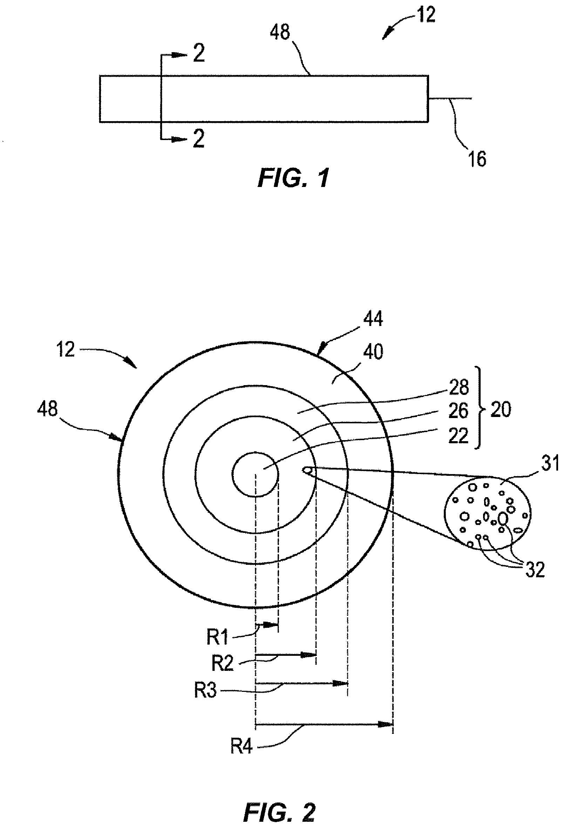

FIG. 1 is a schematic side view of a section of an example embodiment of a light-diffusing optical fiber (also referred to hereinafter as "fiber") **12** having a central axis ("centerline") **16. FIG. 2** is a schematic cross-section of light-diffusing optical fiber **12** as viewed along the direction **2-2** in **FIG. 1.** Fiber **12** can be, for example, any one of the various types of optical fiber with a nano-structured fiber region having periodic or non-periodic nano-sized structures **32** (for example voids). In an example embodiment, fiber **12** includes a core **20** divided into three sections or regions. These core regions are: a solid central portion **22,** a nano-structured ring portion (inner annular core region) **26,** and outer, solid portion **28** surrounding the inner annular core region **26**. A cladding region **40** ("cladding") surrounds the annular core **20** and has an outer surface. The cladding **40** may have low refractive index to provide a high numerical aperture (NA). The cladding **40** can be, for example, a low index polymer such as UV or thermally curable fluoroacrylate or silicone.

An optional coating **44** surrounds the cladding **40**. Coating **44** may include a low modulus primary coating layer and a high modulus secondary coating layer. In at least some embodiments, coating layer **44** comprises a polymer coating such as an acrylate-based or silicone based polymer. In at least some embodiments, the coating has a constant diameter along the length of the fiber.

In other exemplary embodiments described below, coating **44** is designed to enhance the distribution and/or the nature of "radiated light" that passes from core **20** through cladding **40**. The outer surface of the cladding **40** or the of the outer of optional coating **44** represents the "sides" or surface **48** of the fiber **12** through which light traveling in the fiber is made to exit via scattering, as described herein.

A protective cover or sheath (not shown) optionally covers cladding **40**. Fiber **12** may include a fluorinated cladding **40**, but the fluorinated cladding is not needed if the fibers are to be used in short-length applications where leakage losses do not degrade the illumination properties.

In some exemplary embodiments, the core region **26** of fiber **12** comprises a glass matrix ("glass") **31** with a plurality of non-periodically disposed nano-sized structures (e.g., "voids") **32** situated therein, such as the example voids shown in detail in the magnified inset of **FIG. 2.** In another example embodiment, voids **32** may be periodically disposed, such as in a photonic crystal optical fiber, wherein the voids typically have diameters between about $1\times10^{-6}$ m and $1\times10^{-5}$ m. Voids **32** may also be non-periodically or randomly disposed. In some exemplary embodiment, glass **31** in region **26** is fluorine-doped silica, while in other embodiment the glass is undoped pure silica. Preferably the diameters of the voids are at least 10 nm.

The nano-sized structures **32** scatter the light away from the core **20** and toward the outer surface 48 of the fiber. The scattered light is then "diffused" through of the outer surface 48 of the fiber **12** to provide the desired illumination. That is, most of the light is diffused (via scattering) through the sides of the fiber **12,** along the fiber length. Preferably, the fiber emits substantially uniform radiation over its length, and the fiber has a scattering-induced attenuation of greater than 50 dB/km in the wavelength(s) of the emitted radiation (illumination wavelength). Preferably, the scattering-induced attenuation is greater than 100 dB/km for this wavelength. In some embodiments, the scattering-induced attenuation is greater than 500 dB/km for this wavelength, and in some embodiments is 1000 dB/km, greater than 2000 dB/km, and greater than 5000 dB/km. These high scattering losses are about 2.5 to 250 times higher than the Rayleigh scattering losses in standard single mode and multimode optical fibers.

The glass making up core regions **22** and **28** may include updopants, such as Ge, Al, and/or P. By "non-periodically disposed" or "non-periodic distribution," it is meant that when one takes a cross-section of the optical fiber (such as shown in **FIG. 2**), the voids **32** are randomly or non-periodically distributed across a portion of the fiber. Similar cross sections taken at different points along the length of the fiber will reveal different cross-sectional void patterns, i.e., various cross sections will have different voids patterns, wherein the distributions of voids and sizes of voids do not match. That is, the voids are non-periodic, i.e., they are not periodically disposed within the fiber structure. These voids are stretched (elongated) along the length (i.e. parallel to the longitudinal axis) of the optical fiber, but do not extend the entire length of the entire fiber for typical lengths of transmission fiber. While not wishing to be bound by theory, it is believed that the voids extend less than 10 meters, and in many cases less than 1 meter along the length of the fiber.

The fiber **12** as used herein in the illumination systems discussed below can be made by methods which utilize preform consolidation conditions which result in a significant amount of gases being trapped in the consolidated glass blank, thereby causing the formation of voids in the consolidated glass optical fiber preform. Rather than taking steps to remove these voids, the resultant preform is used to form an optical fiber with voids, or nano-sized structures, therein. The resultant fiber's nano-sized structures or voids are utilized to scatter or guide the light out of the fiber, via its sides, along the fiber length. That is, the light is guided away from the core **20**, through the outer surface of the fiber, to provide the desired illumination.

As used herein, the diameter of a nano-sized structure such as void is the longest line segment whose endpoints a) when the optical fiber is viewed in perpendicular cross-section transverse to the longitudinal axis of the fiber. Method of making optical fibers with nano-sized voids is described, for example, in U.S. Patent Application Serial No. 11/583,098, which is incorporated herein by reference.

As described above, in some embodiments of fiber **12**, core sections **22** and **28** comprise silica doped with germanium, i.e., germania-doped silica. Dopants other than germanium, singly or in combination, may be employed within the core, and particularly at or near the centerline **16**, of the fiber to obtain the desired refractive index and density. In at least some embodiments, the relative refractive index profile of the optical fiber disclosed herein is non-negative in sections **22** and **28.** These dopants may be, for example, Al, Ti, P, Ge, or a combination thereof. In at least some embodiments, the optical fiber contains no index-decreasing dopants in the core. In some embodiments, the relative refractive index profile of the optical fiber disclosed herein is non-negative in sections **22, 26** and **28.**

In some examples of fiber **12** as used herein, the core **20** comprises pure silica. In one embodiment, a preferred attribute of the fiber is the ability to scatter light out of the fiber (i.e., to diffuse light) in the desired spectral range that causes a photoreaction in a photoreactive material. In other embodiments, the scattered light may be used for virtually any illumination purposes, including general lighting elements, decorative accents, and white light applications. The amount of the loss via scattering can be increased by changing the properties of the glass in the fiber, the width of the nano-structured region **26**, and the size and the density of the nano-sized structures.

In some examples of fiber **12** as used herein, core **20** is a graded-index core, and preferably, the refractive index profile of the core has a parabolic (or substantially parabolic) shape; for example, in some embodiments, the refractive index profile of core **20** has an $\alpha$-shape with an $\alpha$ value of about 2, preferably between 1.8 and 2.3 as measured at 850 nm. In other embodiments, one or more segments of the refractive index profile have a substantially step index shape with an $\alpha$ value greater than 8, more preferably greater than 10 even more preferably greater than 20 as measured at 850 nm. In some embodiments, the refractive index of the core may have a centerline dip, wherein the maximum refractive index of the core, and the maximum refractive index of the entire optical fiber, is located a small distance away from centerline **16**, but in other embodiments the refractive index of the core has no centerline dip, and the maximum refractive index of the core, and the maximum refractive index of the entire optical fiber, is located at the centerline.

In an exemplary embodiment, fiber **12** has a silica-based core **20** and depressed index (relative to silica) polymer cladding **40**. The low index polymer cladding **40** preferably has a relative refractive index that is negative, more preferably less than -0.5% and even more preferably less than -1%. In some exemplary embodiments cladding **40** has thickness of 20 μm or more. In some exemplary embodiments cladding **40** has a lowed refractive index than than the core, and a thickness of 10 μm or more (e.g., 20 μm or more). In some exemplary embodiments, the cladding has an outer diameter 2 times Rmax, e.g., of about 125 μm (e.g., 120 μm to 130 μm, or 123 μm to 128 μm). In other embodiments the cladding has the diameter that is less than 120 μm, for example 60 or 80 μm. In other embodiments the outer diameter of the cladding is greater than 200 μm, greater than 300 μm, or greater than 500 μm. In some embodiments, the outer diameter of the cladding has a constant diameter along the length of fiber **12**. In some embodiments, the refractive index of fiber **12** has radial symmetry. Preferably, the outer diameter 2**R3** of core **20** is constant along the length of the fiber. Preferably the outer diameters of core sections **22, 26, 28** are also constant along the length of the fiber. By constant, we mean that the variations in the diameter with respect to the mean value are less than 10%, preferably less than 5% and more preferably less than 2%.

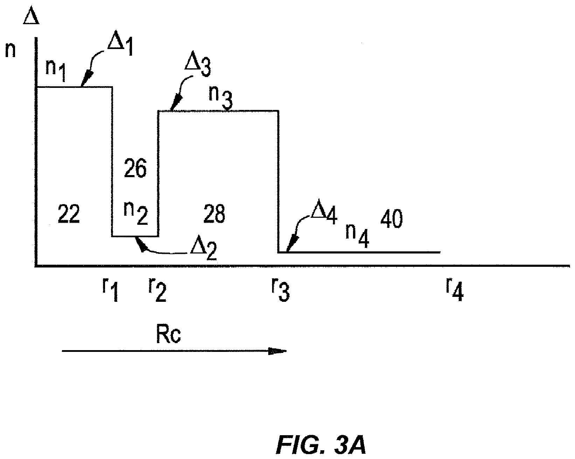

**FIG. 3A** is a plot of the exemplary relative refractive index Δ versus fiber radius for an example fiber **12** shown in **FIG. 2** (solid line). The core **20** may also have a graded core profile, characterized, for example, by an α-value between 1.7 and 2.3 (e.g., 1.8 to 2.3). An alternative exemplary refractive index profile is illustrated by the dashed lines. The solid central portion **22** of the core **20** (or first core region **22**) extends radially outwardly from the centerline 16 to its outer radius, **R1**, and has a relative refractive index profile $\Delta_1(r)$ corresponding to a maximum refractive index n1 (and relative refractive index percent $\Delta_{1MAX}$). In this embodiment, the reference index $n_{REF}$ is the refractive index at the cladding. The second core region **26** (or nano-structured region **26)** has minimum refractive index n2, a relative refractive index profile Δ2(r), a maximum relative refractive index $\Delta2_{MAX}$, and a minimum relative refractive index $\Delta2_{MIN}$, where in some embodiments $\Delta2_{MAX} = \Delta2_{MIN}$. The third core region **28** (or outer, solid portion **28**) has a maximum refractive index n3, a relative refractive index profile Δ3(r) with a maximum relative refractive index $\Delta3_{MAX}$, and a minimum relative refractive index $\Delta3_{MIN}$, where in some embodiments $\Delta3_{MAX} = \Delta3_{MIN}$. In this embodiment the annular cladding **40** has a refractive index n4, a relative refractive index profile Δ4(r) with a maximum relative refractive index $\Delta4_{MAX}$, and a minimum relative refractive index

$\Delta4_{MIN}$. In some embodiments $\Delta4_{MAX} = \Delta4_{MIN}$. In some embodiments, $\Delta1_{MAX}>\Delta4_{MAX}$ and $\Delta3_{MAX} > \Delta4_{MAX}$. In some embodiments $\Delta2_{MIN} > \Delta4_{MAX.}$. In the embodiment shown in **FIGS. 2** and **3A**, $\Delta1_{MAX}>\Delta3_{MAX} > \Delta2_{MAX} > \Delta4_{MAX}$. In this embodiment the refractive indices of the regions have the following relationship n1>n3>n2>n4.

In some embodiments, core regions **22, 28** have a substantially constant refractive index profile, as shown in **FIG. 3A** with a constant Δ1 (r) and Δ3(r). In some of these embodiments, Δ2(r) is either slightly positive (0< Δ2(r) <0.1%), negative (-0.1% < Δ2(r) <0), or 0%. In some embodiments the absolute magnitude of Δ2(r) is less than 0.1%, preferably less than 0.05%. In some embodiments, the outer cladding region **40** has a substantially constant refractive index profile, as shown in **FIG. 3A** with a constant Δ4(r). In some of these embodiments, Δ4(r) = 0%. The core section **22** has a refractive index where Δ1(r) ≥0%. In some embodiments, the void-filled region **26** has a relative refractive index profile Δ2(r) having a negative refractive index with absolute magnitude less than 0.05%, and Δ3(r) of the core region **28** can be, for example, positive or zero. In at least some embodiments, n1>n2 and n3>n4.

In some embodiments the cladding **40** has a refractive index -0.05%<Δ4(r) <0.05%. In other embodiments, the cladding **40** and the core portions portion **20, 26**, and **28** may comprise pure (undoped) silica.

In some embodiments, the cladding **40** comprises pure or F-doped silica. In some embodiments, the cladding **40** comprises pure low index polymer. In some embodiments, nano-structured region **26** comprises pure silica comprising a plurality of voids **32**. Preferably, the minimum relative refractive index and the average effective relative refractive index, taking into account the presence of any voids, of nano-structured region **26** are both less than -0.1 %. The voids or voids **32** may contain one or more gases, such as argon, nitrogen, oxygen, krypton, or $SO_2$ or can contain a vacuum with substantially no gas. However, regardless of the presence or absence of any gas, the average refractive index in nano-structured region **26** is lowered due to the presence of voids **32**. Voids **32** can be randomly or non-periodically disposed in the nano-structured region **26**, and in other embodiments, the voids are disposed periodically therein.

In some embodiments, the plurality of voids **32** comprises a plurality of non-periodically disposed voids and a plurality of periodically disposed voids.

In example embodiments, core section **22** comprises germania doped silica, core inner annular region **28** comprises pure silica, and the cladding annular region **40** comprises a glass or a low index polymer. In some of these embodiments, nano-structured region **26** comprises a plurality of voids **32** in pure silica; and in yet others of these embodiments, nano-structured region **26** comprises a plurality of voids **32** in fluorine-doped silica.

In some embodiments, the outer radius Rc of core is greater than 10 μm and less than 600 μm. In some embodiments, the outer radius Rc of core is greater

than 30 $\mu$m and/or less than 400 $\mu$m. For example, Rc may be 125 $\mu$m to 300 $\mu$m. In other embodiments, the outer radius Rc of the core **20** (please note that in the embodiment shown in **FIG. 3A,** Rc= R3) is larger than 50 $\mu$m and less than 250 $\mu$m. The central portion **22** of the core **20** has a radius in the range $0.1Rc \leq R_1 \leq 0.9Rc$, preferably $0.5Rc \leq R_1 \leq 09Rc$. The width W2 of the nano-structured ring region **26** is preferably $0.05Rc \leq W2 \leq 0.9Rc$, preferably $0.1Rc \leq W2 \leq 0.9Rc$, and in some embodiments $0.5Rc \leq W2 \leq 0.9Rc$ (a wider nano-structured region gives a higher scattering-induced attenuation, for the same density of nano-sized structures). The solid glass core region **28** has a width Ws=W3 such that 0.1Rc > W 3> 0.9Rc. Each section of the core **20** comprises silica based glass. The radial width $W_2$ of nano-structured region **26** is preferably greater than 1 $\mu$m. For example, $W_2$ may be 5 $\mu$m to 300 $\mu$m, and preferably 200 $\mu$m or less. In some embodiments, $W_2$ is greater than 2 $\mu$m and less than 100 $\mu$m. In other embodiments, W2 is greater than 2 $\mu$m and less than 50 $\mu$m. In other embodiments, $W_2$ is greater than 2 $\mu$m and less than 20 $\mu$m. In some embodiments, $W_2$ is at least 7 $\mu$m. In other embodiments, $W_2$ is greater than 2 $\mu$m and less than 12 $\mu$m. The width $W_3$ of core region **28** is (R3-R2) and its midpoint $R_{3MID}$ is (R2+ R3)/2. In some embodiments, $W_3$ is greater than 1 um and less than 100 $\mu$m.

The numerical aperture (NA) of fiber **12** is preferably equal to or greater than the NA of a light source directing light into the fiber. Preferably the numerical aperture (NA) of fiber **12** is greater than 0.2, in some embodiments greater than 0.3, and even more preferably greater than 0.4.

In some embodiments, the core outer radius **R1** of the first core region **22** is preferably not less than 24 $\mu$m and not more than 50 $\mu$m, i.e. the core diameter is between about 48 and 100 $\mu$m. In other embodiments, R1 > 24 microns; in still other embodiments, R1 > 30 microns; in yet other embodiments, R1 > 40 microns.

In some embodiments, $|\Delta_2(r)| < 0.025\%$ for more than 50% of the radial width of the annular inner portion **26,** and in other embodiments $|\Delta_2(r)| < 0.01\%$ for more than 50% of the radial width of region **26.** The depressed-index annular portion **26** begins where the relative refractive index of the cladding first reaches a value of less than -0.05%, going radially outwardly from the centerline. In some embodiments, the cladding **40** has a relative refractive index profile $\Delta 4(r)$ having a maximum absolute magnitude less than 0.1%, and in this embodiment $\Delta 4_{MAX} < 0.05\%$ and $\Delta 4_{MIN} > -0.05\%$, and the depressed-index annular portion **26** ends where the outermost void is found.

Cladding structure **40** extends to a radius **R4,** which is also the outermost periphery of the optical fiber. In some embodiments, the width of the cladding, R4-R3, is greater than 20 $\mu$m; in other embodiments R4-R3 is at least 50 $\mu$m, and in some embodiments, R4-R3 is at least 70 $\mu$m.

In another embodiment, the entire core **20** is nano-structured (filled with voids, for example), and the core **20** is surrounded by the cladding **40.** The core **20** may have a "step" refractive index delta, or may have a graded core profile, with $\alpha$-profile having, for example, $\alpha$-value between 1.8 and 2.3.

Preparation of an optical preform (not shown) used to form fibers **12** was formed in one exemplary embodiment wherein 470 grams of $SiO_2$ (0.5 g/cc density) soot are deposited via outside vapor deposition (OVD) onto a fully consolidated 1 meter long, 20 mm diameter pure silica void-free core cane, resulting in a preform assembly (sometimes referred to as a preform, or an optical preform) comprising a consolidated void-free silica core region which was surrounded by a soot silica region. The soot cladding of this perform assembly was then sintered as follows. The preform assembly was first dried for 2 hours in an atmosphere comprising helium and 3 percent chlorine (all percent gases by volume) at 1100°C in the upper-zone part of the furnace, followed by down driving at 200 mm/min (corresponding to approximately a 100°C/min temperature increase for the outside of the soot preform during the downdrive process) through a hot zone set at approximately 1500°C in a 100 percent $SO_2$ (by volume) sintering atmosphere. The preform assembly was then down driven again (i.e., a second time) through the hot zone at the rate of 100 mm/min (corresponding to an approximately 50°C/min temperature increase for the outside of the soot preform during the downdrive process). The preform assembly was then down driven again (i.e., a third time) through the hot zone at the rate of 50 mm/min (corresponding to an approximately 25°C/min temperature increase for the outside of the soot preform during the downdrive process). The preform assembly was then down driven again (i.e., a fourth time) through the hot zone at the rate of 25 mm/min (corresponding to an approximately 12.5°C/min temperature increase for the outside of the soot preform during the downdrive process), then finally sintered at 6 mm/min (approximately 3°C/min heat up rate) in order to sinter the soot into an $SO_2$-seeded silica overclad preform. Following each downdrive step, the preform assembly was updriven at 200 mm/min into the upper-zone part of the furnace (which remained set at 1100°C). The first series of higher downfeed rate are employed to glaze the outside of the optical fiber preform, which facilitates trapping of the gases in the preform. The preform was then placed for 24 hours in an argon purged holding oven set at 1000°C to outgas any remaining helium in the preform. This preform was then redrawn in an argon atmosphere on a conventional graphite redraw furnace set at approximately 1700°C into void-free $SiO_2$ core, $SO_2$- seeded (i.e., containing the non-periodically located voids containing $SO_2$ gas) silica overclad canes which were 10 mm in diameter and 1 meter long.

One of the 10 mm canes was placed back in a lathe where about 190 grams of additional $SiO_2$ (0.52 g/cc density) soot was deposited via OVD. The soot of this cladding (which may be called overcladding) for this assembly was then sintered as follows. The assembly was first dried for 2 hours in an atmosphere consisting of helium and 3 percent chlorine at 1100°C followed by down driving at 5 mm/min through a hot zone set at 1500°C in a 100 % helium (by volume) atmosphere in order to sinter the soot to a germania containing void-free silica core, silica $SO_2$-seeded ring (i.e. silica with voids containing $SO_2$), and void-free overclad preform. The preform was placed for 24 hours in an argon purged holding oven set at 1000°C to outgas any remaining helium from the preform. The optical fiber preform was drawn to 3 km lengths of 125 micron diameter optical fiber at approximately 1900°C to 2000°C in a helium atmosphere on a graphite resistance furnace. The temperature of the optical preform was controlled by monitoring and controlling the optical fiber tension; in this embodiment the fiber tension was held at one value between 30 and 600 grams during each portion (e.g., 3 km lengths) of a fiber draw run. The fiber was coated with a low index silicon based coating during the draw process.

Another 10 mm void-free silica core $SO_2$-seeded silica overclad canes described above (i.e., a second cane) was utilized to manufacture the optical preform and fibers for examples shown in **FIG. 4B.** More specifically, the second 10 mm void-free silica core $SO_2$-seeded silica overclad cane was placed back in a lathe where about 3750 grams of additional $SiO_2$ (0.67 g/cc density) soot are deposited via OVD. The soot of this cladding (which may be called overcladding for this assembly) was then sintered as follows. The assembly was first dried for 2 hours in an atmosphere comprising of helium and 3 percent chlorine at 1100°C, followed by down driving at 5 mm/min through a hot zone set at 1500°C in a 100 % helium (by volume) atmosphere in order to sinter the soot so as to produce preform comprising germania containing void-free silica core, silica $SO_2$- seeded ring (i.e. silica with voids containing $SO_2$), and void-free overclad. The resultant optical fiber preform was placed for 24 hours in an argon purged holding oven set at 1000°C to outgas any remaining helium from the preform. Finally, the optical fiber preform was drawn to 5 km lengths of 125 micron diameter optical fiber and coated with the low index polymer as described above.

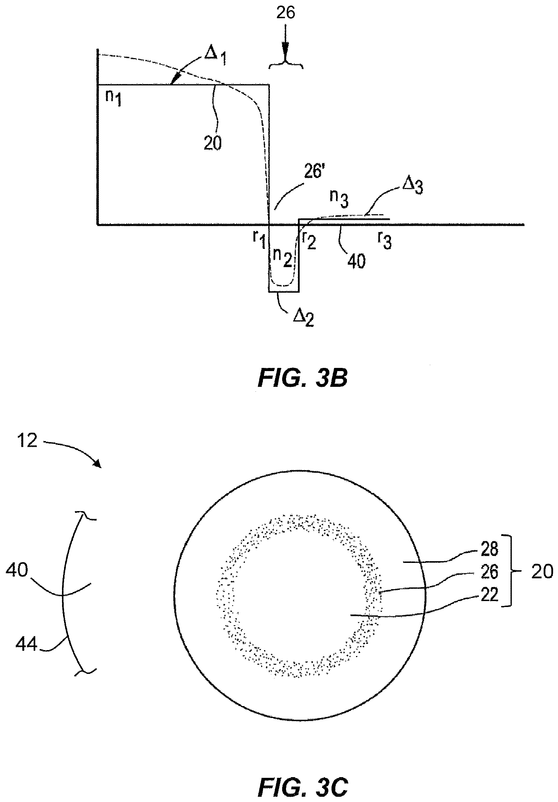

**FIG. 3B** illustrates schematically yet another exemplary embodiment of fiber **12.** The fiber **12** of **FIG. 3B** includes a core **20** with a relative refractive index $\Delta_1$, a nano-structured region **26'** situated over and surrounding the core **20.** The core **20** may have a "step" index profile, or a graded core profile, with $\alpha$-profile having, for example, $\alpha$-value between 1.8 and 2.3.

In this exemplary embodiment (see **Fig. 3B**) the nano-structured region **26'** is an annular ring with a plurality of voids **32.** In this embodiment, the width of region **26'** can be as small as 1-2 um, and may have a negative average relative refractive index $\Delta_2$. Cladding **40** surrounds the nano-structured region **26'.** The (radial) width of cladding **40** may be as small as 1 $\mu$m, and the cladding may have either a negative, a positive or 0% relative refractive index, (relative to pure silica).

The main difference between examples in **FIGS. 3A** and **3B** is that nano-structured region in shown in **FIG. 3A** is located in the core **20** and in **FIG. 3B** it is located at the core/clad interface. The depressed-index annular portion **26'** begins where the relative refractive index of the core first reaches a value of less than -0.05%, going radially outwardly from the centerline. In the embodiment of **FIG. 3B**, the cladding **40** has a relative refractive index profile $\Delta3(r)$ having a maximum absolute magnitude less than 0.1%, and in this embodiment $\Delta3_{MAX}$ < 0.05% and $\Delta3_{MIN}$ > -0.05%, and the depressed-index annular portion **26** ends where the outmost void occurs in the void-filled region.

In the embodiment shown in **FIG. 3B** the index of refraction of the core **20** is greater than the index of refraction n2 of the annular region **26'**, and the index of refraction n1 of the cladding **40** is also greater than the index of refraction n2.

**FIG. 3C** is a schematic cross-sectional view of an example core **20** of fiber **12** representative of an actual fiber that was fabricated. With reference also to **FIG. 2**, core **20** of **FIG. 3C** has a first core region **22** with an outer radius R1 of about 33.4 $\mu$m, a nano- structured region **26** with an outer radius R2= 42.8 $\mu$m, a third core region **28** with an outer radius R3= 62.5 $\mu$m, and a polymer cladding **40** (see **FIG. 2**) with an outer radius R4 (not shown) of 82.5 $\mu$m. In this embodiment, the material of the core is pure silica (undoped silica), the material for cladding was low index polymer (e.g., UV curable silicone having a refractive index of 1.413 available from Dow-Corning of Midland, Michigan under product name Q3-6696) which, in conjunction with the glass core, resulted in fiber NA of 0.3. The optical fiber **12** had a relatively flat (weak) dependence on wavelength, compared to standard single-mode transmission fiber, such as for example SMF-28e[R] fiber, as represented in **FIG. 4B.** In standard single mode (such as SMF-28[R]) or multimode optical fibers, the losses at wavelengths less than 1300 nm are dominated by Rayleigh scattering. These Rayleigh scattering losses are determined by the properties of the material and are typically about 20 dB/km for visible wavelengths (400-700 nm). The wavelength dependence of Rayleigh scattering losses is proportional to $\square^{-p}$ with p≈4. The exponent of the wavelength dependent scattering losses in the fiber comprising at least one nanostructured region is less than 2, preferably less than 1 over at least 80% (for example greater than 90%) in the 400 nm-1100 nm wavelength range. The average spectral attenuation from 400 nm to 1100 nm was about 0.4 dB/m when the fiber was drawn with at 40 g tension and was about 0.1 dB/m when the fiber **12** was drawn at 90 g tension. In this embodiment, the nano-sized structures contain $SO_2$ gas. Applicants found that filled $SO_2$ voids in the nano-structured ring greatly contribute to scattering. Furthermore, when $SO_2$ gas was used to form the nano-structures, it has been discovered that this gas allows a thermally reversible loss to be obtained, i.e.,

below 600 °C the nano-structured fiber scatters light, but above 600 °C the same fiber will guide light. This unique behavior that $SO_2$ imparts is also reversible, in that upon cooling the same fiber below 600 °C, the fiber **12** will act as light-diffusing optical fiber and will again generate an observable scattering effect.

In preferred embodiments, the uniformity of illumination along the fiber length is controlled such that the minimum scattering illumination intensity is not less than 0.7 of the maximum scattering illumination intensity, by controlling fiber tension during the draw process; or by selecting the appropriate draw tension (e.g., between 30g and 100g, or between 40 g and 90 g).

Accordingly, according to some embodiments, a method of making fiber **12** to control uniformity of illumination along the fiber length wherein the minimum scattering illumination intensity is not less than 0.7 the maximum scattering illumination intensity includes the step of controlling fiber tension during draw process.

The presence of the nano-sized structures **32** in fiber **12** (see **FIG. 2**) creates losses due to optical scattering, and the light scattering through the outer surface of the fiber can be used for illumination purposes. **FIG. 4A** is a plot of the attenuation (loss) in dB/m versus wavelength (nm) for the fiber of **FIG. 3C** (fiber with $SO_2$ gas filled voids). **FIG. 4A** illustrates that (i) fibers **12** can achieve very large scattering losses (and thus can provide high illumination intensity) in the visible wavelength range. The scattering losses of fiber **12** also have weak wavelength dependence ($L_s$ is proportional to $1/\lambda^{-p}$, where p is less than 2, preferably less than 1, and even more preferably less than 0.5), as compared to regular 125 $\mu$m graded index core multi mode comparative fiber A (fiber A is a step index multimode fiber without the nano-structured region) which has Rayleigh scattering losses of about 0.02 dB/m in the visible wavelength range, or about 20 dB/km at the wavelength of 500 nm and relatively strong wavelength dependence of $1/\lambda^4$). The effect of the tension for the fibers **12** is also illustrated in **FIGS. 4A-4B**. More specifically **FIGS. 4A-4B** illustrate that the higher fiber draw tension results in lower scattering losses, and that lower fiber draw tension results in a fiber section with higher scattering loss, i.e., stronger illumination.

**FIG. 4A** depicts attenuation as function of wavelength for fiber **12** (with voids in the core) drawn at different fiber tensions of 90 and 400 g. **FIG. 4B** depicts attenuation as function of wavelength for different light-diffusing optical fiber **12** (with voids in the core) drawn at different fiber tension, 90 and 40 g, a comparative multi mode fiber (fiber A) with normalized loss, and a theoretical fiber with $1/\lambda$ loss dependence. Note, the graph of **FIG. 4B** describes wavelength dependence of the loss. In this example, in order to compare the slope of the scattering for fiber **12** and fiber A, the loss of low-loss fiber (fiber A) was multiplied by a factor of 20, so that the two plots can be easily shown on the same figure.

Without being bound to any particular theory, it is believed that the increase in the scattering losses when the draw tension decreases, for example from 90g to 40g, is due to an increase in the average diameter of the nanostructures. Therefore, this effect of fiber tension could be used to produce constant attenuation (illumination intensity) along the length of the fiber by varying the fiber tension during the draw process. For example, a first fiber segment drawn at high tension, T1, with a loss of $\alpha_1$ dB/m and length, L1, will attenuate the optical power from an input level P0 to P0 exp($-\alpha_1$*L1/4.343). A second fiber segment optically coupled to the first fiber segment and drawn at lower tension T2 with a loss of $\alpha_2$ dB/m and length L2 will further attenuate the optical power from P0 exp($-\alpha_1$*L1/4.343) to P0 exp($-\alpha_1$*L1/4.343) exp($-\alpha_2$*L2/4.343). The lengths and attenuations of the first and second fiber segments can be adjusted to provide uniform intensity along the length of the concatenated fiber. One of the advantages of fibers **12** is their ability to provide uniform illumination along its length.

**Modular illumination systems**

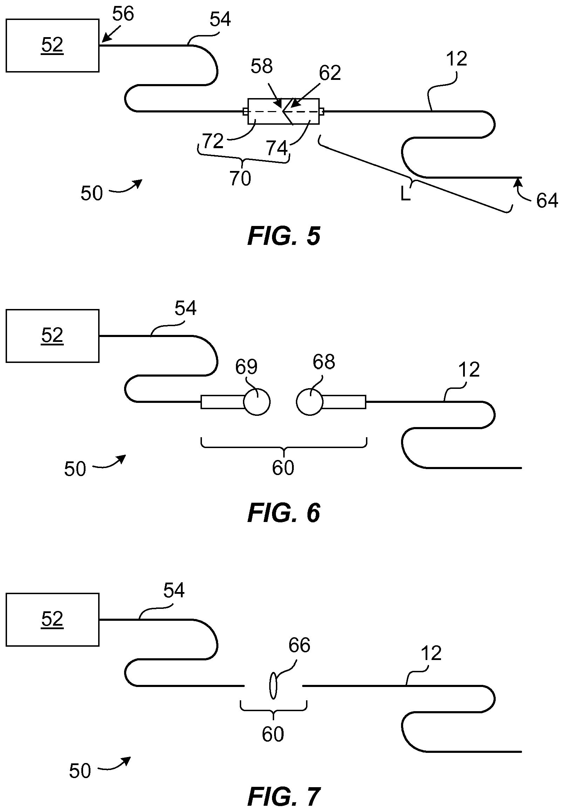

According to an example of the present disclosure, shown diagrammatically in **FIG.5**, an illumination system 50 is provided. The illumination system 50 includes at least one light source 52 that generates light having at least one wavelength between 200 nm and 2000 nm. The system 50 further includes at least one low-scatter light-conducting optical fiber 54 with an input end 56 optically coupled to the at least one light source 52 and with an output end 58. The at least one low-scatter light-conducting optical fiber 54 is configured to provide the light received from the at least one light source 52 to the output end 58 as guided light.

The system 50 further includes at least one light-diffusing optical fiber 12 having a glass core 20, a cladding 40 surrounding the core 20, and a plurality of nano-sized structures 32 situated within said core 20 or at a core-cladding boundary. The at least one light-diffusing optical fiber 12 further includes an outer surface 48, an input end 62 and an output end 64. The input end 62 of the at least one light-diffusing optical fiber 12 is removably and optically coupled to the output end 58 of the at least one low-scatter light-conducting optical fiber 54. The at least one light-diffusing optical fiber 12 is configured to receive the guided light from the low-scatter light-conducting optical fiber 54 and scatter at least a portion of said guided light via said nano-sized structures 32 away from the glass core 20 and through the outer surface 48, to form an emitting light-diffusing optical fiber 12 having at least one continuous length L over which scattered light is emitted. As shown in FIG. 5, the removable optical coupling may be achieved by use of a connector 70 with mating halves 72,74, which halves 72,74 mechanically plug together to establish an optical coupling.

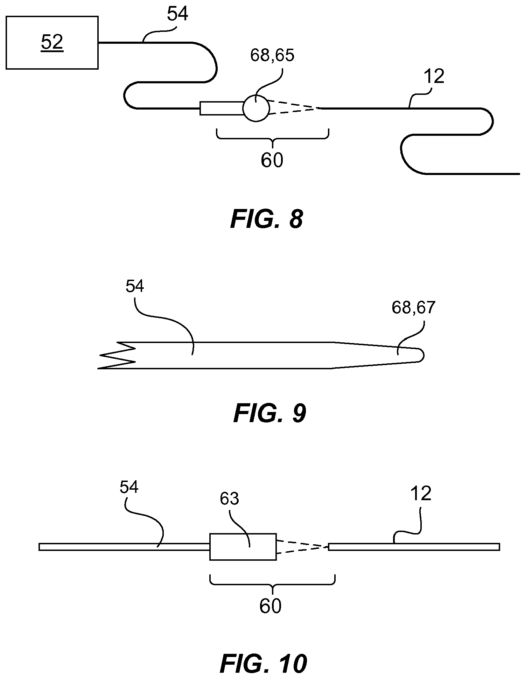

Alternatively, as in FIGS. 6-8, the at least one light-diffusing optical fiber 12 may be optically coupled to the at least one low-scatter light-conducting optical fiber 54 via a free space optical coupling 60, various types of which are shown in FIGS. 6-8. These include: (1) a free-space optical coupling 60 comprising a lens 66 positioned between the output end 58 of the at least one low-scatter light-conducting optical fiber 54 and the input end 62 of the at least one light-diffusing optical fiber 12, as in FIG. 7; and (2) a free space optical coupling including a lens 68 attached to the output end 58 of the at least one low-scatter light-conducting optical fiber 54, as in FIGS. 6 and 8, which may further include, as in FIG.6, a lens 69 attached to the input end 62 of the at least one light-diffusing optical fiber 12. Alternatively, as shown in Fig. 8, the input end 62 of the at least one light-diffusing optical fiber 12 may receive light from the lens 68 directly (from ball lens 65, in directly, in the case of FIG. 8). In addition to ball lenses 65, other types of lens 68 may be used. In the example of FIG. 9, For example, a sculpted tip 67 on the output end 58 of the at least one low-scatter light-conducting optical fiber 54 is used as a lens 68. A GRIN lens 63 may also be used, such as in the example shown in FIG. 10.

According to some examples, particular for illumination applications requiring visible light, the light source 52 may be a white light source, a colored light source, or a variable color light source, among others. For marking or signaling applications, among others, the light source 52 may be an infrared source. In such embodiments the at least one light-diffusing fiber 12 would typically not incorporate phophors.

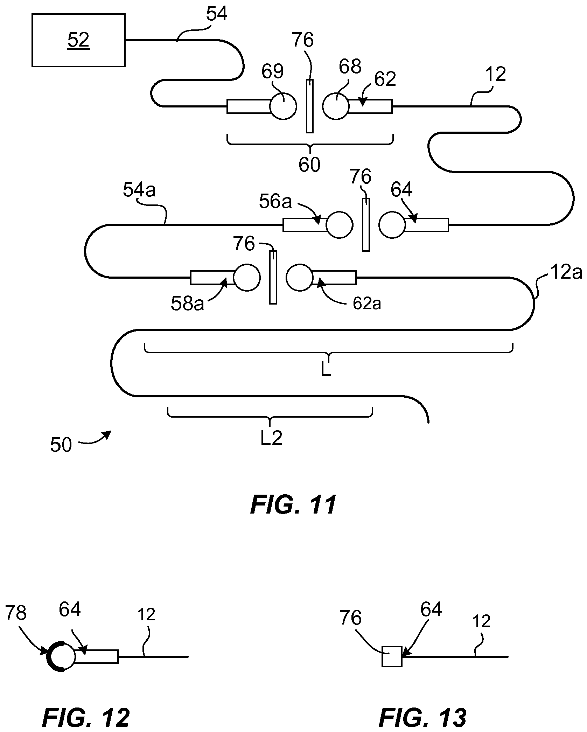

According to other examples of the present disclosure, the light source 52 produces only wavelengths of 500 nm or less, that is, the light source 52 is an "ultraviolet" source. Such embodiments are particularly useful in creating highly varied or highly variable illumination systems using a single source 52 or only a few sources 52, since by using various phosphors in the associated light diffusing fibers, many different frequencies of light may be produced from initial UV light, including infrared light and various colors or frequency combinations of visible light. FIG. 11 shows an illumination system that utilizes this principle.

In FIG. 11, an illumination system (50) includes, in addition to the structures or their alternatives as generally discussed above with respect to FIGS. 5-10, at least one second light-diffusing optical fiber 12a, the at least one second light-diffusing optical fiber 12a also having a glass core 20, a cladding 40 surrounding the core 20, and a plurality of nano-sized structures 32 situated within said core 20 or at a core-cladding boundary and further including an outer surface 48. An input end 62a of the at least one second light-diffusing optical fiber 12a is optically coupled to the output end 64 of the at least one light-diffusing optical fiber 12, such that the at least one second light-diffusing optical fiber (12a) is positioned and/or configured to receive a remaining guided light emanating from output and 64 of the at least one light-diffusing optical fiber 12. The at least one second light-diffusing optical fiber 12a scatters at least a portion of the remaining guided light, via its nano-sized structures 32, away from its glass core 20 and through its outer surface 48, to form an emitting light-diffusing optical fiber (12a) having at least one continuous length L over which scattered light is emitted. If desired, some portions of the second light-diffusing optical fiber 12a might be shielded, such that the fiber 12a has multiple continuous lengths L, L2 over which scattered light is emitted.

As is shown in FIG. 11, the at least one second light-diffusing optical fiber 12a may be removably coupled to the at least one light-diffusing optical fiber 12, and the optical coupling may also not direct, but via at least one second one low-scatter light-conducting optical fiber 54a having an input end 56a optically coupled to the output end 64 of the at least one light-diffusing optical fiber 12, and having an output end 58a optically coupled to the input end 62a of the at least one second light-diffusing optical fiber 12a. The subsequent couplings after the first coupling (the free space coupling labeled 60 in the embodiment of FIG. 11) need not be removeable, however, in every embodiment. For example, for some applications it may be desirable that all couplings after the indicated first (free space) coupling 60 be in the form of permanent fusion splices or other permanent coupling. The combination of downstream permanent couplings for one or more additional fibers downstream fibers with a removeable first coupling between the at least one low-scatter light-conducting optical fiber 54 and the at least one light-diffusing optical fiber 12 provides a nice combination of benefits: downstream couplings are robust and reliably low loss, and the downstream illumination assembly is replaceable as a single unit, while at the same time, the replacement point is not directly at the original light source 54 but at the coupling, in this case, free-space coupling 60. This allows separation of the initial lights source or sources 52 from the point at which maintenance or replacement is performed. Thus undesirable heat generated from the light source 52 may be isolated from the interchangeable or replaceable illumination system components downstream

As noted above, the at least one light-diffusing optical fiber 12 may comprise one or more first phosphors to convert at least a portion of the guided light into one or more first other wavelengths, such as one or more first visible wavelengths. In such an embodiment, the illumination system 50 may further include at least one filter or absorber 76, optically coupled to at least one end (62,64) of the at least one light-diffusing optical fiber (12), which filter or absorber 76 prevents or reduces propagation of the one or more first other wavelengths. This has the advantage of providing visual light isolation between successive fibers in the illumination system 50, so that color light generated in another fiber having a phosphor does not bleed over into a fiber intended as non-diffusing fiber, such as fiber 54a, or into another light diffusing fiber such as fiber 12a, which may comprise one or more second phosphors to convert at least a portion of the remaining guided light into one or more second other wavelengths, which wavelengths may differ at least in part from the one or more first other wavelengths.

Filters/absorbers may take the form of discrete elements 76 as in FIG. 11, but may also take other forms, such as the form of a filter or absorber coating 78 on an end of the at least one light-diffusing optical fiber 12, or on the surface of another optical component optically coupled to an end 62,64 of the at least one light-diffusing optical fiber 12, such as a coating 78 on a on a ball lens as shown in FIG. 12. As another alternative, a bulk filter or absorber component may be attached directly to the associated fiber, as with bulk filter/absorber 76 attached to fiber 12 as shown in FIG. 13.

**Claims**

1.  An illumination system (50), comprising:

    at least one light source (52) that generates light having at least one wavelength between 200 nm and 2000 nm;
    at least one low-scatter light-conducting optical fiber (54) having an input end (56) optically coupled to the at least one light source (52) and having an output end (58), and being configured to provide the light received from the at least one light source (52) to the output end (58) as guided light; and
    at least one first light-diffusing optical fiber (12) having a glass core (20), a cladding (40) surrounding the core (20), and a plurality of nano-sized structures (32) situated within said core (20) or at a core-cladding boundary, and further including an outer surface (48), an input end (62) and an output end (64), the input end (62) of the at least one first light-diffusing optical fiber (12) being removably and optically coupled to the output end (58) of the at least one low-scatter light-conducting optical fiber (54), the at least one first light-diffusing optical fiber (12) being configured to receive the guided light from the low-scatter light-conducting optical fiber (54) and scatter at least a portion of said guided light via said nano-sized structures (32) away from the glass core (20) and through the outer surface (48), to form an emitting first light-diffusing optical fiber (12) having at least one continuous length L over which scattered light is continuously emitted
    **characterised by** further comprising:

    at least one second light-diffusing optical fiber (12a) having a glass core (20), a cladding (40) surrounding the core (20), and a plurality of nano-sized structures (32) situated within said core (20) or at a core-cladding boundary, and further including an outer surface (48), and an input end (62a) optically coupled to the output end (64) of the at least one light-diffusing optical fiber (12), the at least one second light-diffusing optical fiber (12a) being configured to receive a remaining guided light from the at least one light-diffusing optical fiber (12) and scatter at least a portion of the remaining guided light via said nano-sized structures (32) away from the glass core (20) and through the outer surface (48), to form an emitting light-diffusing optical fiber (12a) having at least one continuous length L over which scattered light is emitted
    wherein the at least one first light-diffusing optical fiber (12) comprises one or more first phosphors to convert at least a portion of the guided light into one or more first other wavelengths; and
    wherein the at least one second light-diffusing optical fiber (12a) comprises one or more second phosphors to convert at least a portion of the remaining guided light into one or more second other wavelengths.

2.  The illumination system according to claim 1, wherein the at least one first light-diffusing optical fiber (12) is optically coupled to the at least one low-scatter light-conducting optical fiber (54) via a connector (70) with mating halves (72,74), which halves (72,74) mechanically plug together to establish an optical coupling.

3.  The illumination system according to either of claims 1 and 2, wherein the at least one first light-diffusing optical fiber (12) is optically coupled to the at least one low-scatter light-conducting optical fiber (54) via a free space optical coupling (60).

4.  The illumination system according to any of claims 1-3 wherein the at least one light source (52) generates only light having one or more wavelengths in the range of 500 nm or less.

5.  The illumination system according to any of claims 1 to 4 wherein the at least one second light-diffusing optical fiber (12a) is removably coupled to the at least one light-diffusing optical fiber (12).

6.  The illumination system according to any of claims 1 to 5 further comprising at least one filter or absorber (76), that prevents or reduces propagation of the one or more first other wavelengths, optically coupled to at least one end (62,64) of the at least one first light-diffusing optical fiber (12).

7.  The illumination system according to any of claims 1 to 6 comprising at least one second one low-scatter light-conducting optical fiber (54a) having an input end (56a) optically coupled to the output end (64) of the at least one first light-diffusing optical fiber (12), and having an output end (58a) optically coupled to the input end (62a) of the at least one second light-diffusing optical fiber (12a).

8. The illumination system according to either of claims 6 and 7 wherein the one or more second other wavelengths differ at least in part from the one or more first other wavelengths.

9. The illumination system of claim 7, further comprising at least one optical filter or absorber (76) at or between the output end (64) of the at least one first light-diffusing optical fiber (12) and the input end (62a) of the at least one second light-diffusing optical fiber (12a), the at least one optical filter or absorber (76) configured to prevent or reduce propagation of the one or more first other wavelengths from the at least one first light-diffusing optical fiber (12) into the at least one second light-diffusing optical fiber (12a).

10. The illumination system according to either of claims 6 and 9 wherein the at least one optical filter or absorber (76) comprises a coating (78) on an end of the at least one first light-diffusing optical fiber (12) or on the surface of another optical component optically coupled to an end (62,64) of the at least one light-diffusing optical fiber (12).

11. The illumination system of claim 10 wherein the filter or absorber (76) is a discrete component coupled to an end of the one or more light-diffusing optical fibers.

**Patentansprüche**

1. Beleuchtungssystem (50), umfassend:

wenigstens eine Lichtquelle (52), die Licht mit wenigstens einer Wellenlänge zwischen 200 nm und 2000 nm generiert; wenigstens eine streuungsarme lichtleitende optische Faser (54) mit einem Eingangsende (56), das optisch mit der wenigstens einen Lichtquelle (52) verbunden ist, und einem Ausgangsende (58), und dazu ausgelegt, dem Ausgangsende (58) das von der wenigstens einen Lichtquelle (52) empfangene Licht als geführtes Licht bereitzustellen; und wenigstens eine erste lichtstreuende optische Faser (12) mit einem Glaskern (20), einem den Kern (20) umgebenen Mantel (40) und einer Vielzahl von Strukturen im Nanobereich (32), die sich in dem Kern (20) oder an einer Kern-Mantel-Grenze befinden, und ferner umfassend eine Außenfläche (48), ein Eingangsende (62) und ein Ausgangsende (64), wobei das Eingangsende (62) der wenigstens einen ersten lichtstreuenden optischen Faser (12) mit dem Ausgangsende (58) der wenigstens einen streuungsarmen lichtleitenden optischen Faser (54) entfernbar und optisch verbunden ist, wobei die wenigstens eine erste lichtstreuende optische Faser (12) zum Empfangen des geführten Lichts von der streuungsarmen lichtleitenden optischen Faser (54) und Streuen von wenigstens einem Teil des geführten Lichts über die Strukturen im Nanobereich (32) von dem Glaskern (20) weg und durch die Außenflächen (48) hindurch ausgelegt ist, um eine emittierende erste lichtstreuende optische Faser (12) mit wenigstens einer durchgängigen Länge L auszubilden, über welche gestreutes Licht kontinuierlich emittiert wird,

**dadurch gekennzeichnet, dass** es ferner Folgendes umfasst:

wenigstens eine zweite lichtstreuende optische Faser (12a) mit einem Glaskern (20), einem den Kern (20) umgebenen Mantel (40) und einer Vielzahl von Strukturen im Nanobereich (32), die sich in dem Kern (20) oder an einer Kern-Mantel-Grenze befinden, und ferner umfassend eine Außenfläche (48) und ein Eingangsende (62a), das optisch mit dem Ausgangsende (64) der wenigstens einen lichtstreuenden optischen Faser (12) verbunden ist, wobei die wenigstens eine zweite lichtstreuende optische Faser (12a) zum Empfangen eines verbleibenden geführten Lichts von der wenigstens einen lichtstreuenden optischen Faser (12) und Streuen von wenigstens einem Teil des verbleibenden geführten Lichts über die Strukturen im Nanobereich (32) von dem Glaskern (20) weg und durch die Außenflächen (48) hindurch ausgelegt ist, um eine emittierende lichtstreuende optische Faser (12a) mit wenigstens einer durchgängigen Länge L auszubilden, über welche gestreutes Licht emittiert wird, wobei die wenigstens eine erste lichtstreuende optische Faser (12) einen oder mehrere erste Leuchtstoffe umfasst, um wenigstens einen Teil des geführten Lichts in eine oder mehrere erste andere Wellenlängen umzuwandeln; und wobei die wenigstens eine zweite lichtstreuende optische Faser (12a) einen oder mehrere zweite Leuchtstoffe umfasst, um wenigstens einen Teil des verbleibenden geführten Lichts in eine oder mehrere zweite andere Wellenlängen umzuwandeln.

**2.** Beleuchtungssystem nach Anspruch 1, wobei die wenigstens eine erste lichtstreuende optische Faser (12) über ein Verbindungselement (70) mit zusammengehörenden Hälften (72, 74) optisch mit der wenigstens einen streuungsarmen lichtleitenden optischen Faser (54) optisch verbunden ist, wobei die zusammengehörenden Hälften (72, 74) mechanisch zusammengesteckt werden, um ein optische Kopplung zu bilden.

**3.** Beleuchtungssystem nach einem der Ansprüche 1 und 2, wobei die wenigstens eine erste lichtstreuende optische Faser (12) über eine optische Freiraumkopplung (60) mit der wenigstens einen streuungsarmen lichtleitenden optischen Faser (54) optisch verbunden ist.

**4.** Beleuchtungssystem nach einem der Ansprüche 1-3, wobei die wenigstens eine Lichtquelle (52) nur Licht mit einer oder mehreren Wellenlängen im Bereich von 500 nm oder weniger generiert.

**5.** Beleuchtungssystem nach einem der Ansprüche 1 bis 4, wobei die wenigstens eine zweite lichtstreuende optische Faser (12a) mit der wenigstens einen lichtstreuenden optischen Faser (12) entfernbar verbunden ist.

**6.** Beleuchtungssystem nach einem der Ansprüche 1 bis 5, ferner umfassend wenigstens einen Filter oder Absorber (76), der die Ausbreitung der einen oder mehreren ersten anderen Wellenlängen verhindert oder reduziert, optisch verbunden mit wenigstens einem Ende (62, 64) der wenigstens einen ersten lichtstreuenden optischen Faser (12).

**7.** Beleuchtungssystem nach einem der Ansprüche 1 bis 6, umfassend wenigstens eine zweite streuungsarme lichtleitende optische Faser (54a) mit einem Eingangsende (56a), das mit dem Ausgangsende (64) der wenigstens einen ersten lichtstreuenden optischen Faser (12) optisch verbunden ist, und einem Ausgangsende (58a), das mit dem Eingangsende (62a) der wenigstens einen zweiten lichtstreuenden optischen Faser (12a) optisch verbunden ist.

**8.** Beleuchtungssystem nach einem der Ansprüche 6 und 7, wobei sich die eine oder mehreren zweiten anderen Wellenlängen wenigstens teilweise von der einen oder den mehreren ersten anderen Wellenlängen unterscheiden.

**9.** Beleuchtungssystem nach Anspruch 7, ferner umfassend wenigstens einen optischen Filter oder Absorber (76) an oder zwischen dem Ausgangsende (64) der wenigstens einen ersten lichtstreuenden optischen Faser (12) und dem Eingangsende (62a) der wenigstens einen zweiten lichtstreuenden optischen Faser (12a), wobei der wenigstens eine optische Filter oder Absorber (76) dazu ausgelegt ist, die Ausbreitung der einen oder mehreren ersten anderen Wellenlängen von der wenigstens einen ersten lichtstreuenden optischen Faser (12) in wenigstens eine zweite lichtstreuende optische Faser (12a) zu verhindern oder zu reduzieren.

**10.** Beleuchtungssystem nach einem der Ansprüche 6 und 9, wobei der wenigstens eine optische Filter oder Absorber (76) eine Umhüllung (78) an einem Ende der wenigstens einen ersten lichtstreuenden Faser (12) oder an der Oberfläche eines anderen optischen Bauteils umfasst, das mit einem Ende (62, 64) der wenigstens einen lichtstreuenden optischen Faser (12) optisch verbunden ist.

**11.** Beleuchtungssystem nach Anspruch 10, wobei es sich bei dem Filter oder Absorber (76) um ein Einzelbauteil handelt, das mit einem Ende der einen oder mehreren lichtstreuenden Fasern verbunden ist.

**Revendications**

**1.** Système d'éclairage (50), comprenant :

au moins une source lumineuse (52) générant de la lumière, et présentant au moins une longueur d'onde comprise entre 200 nm et 2000 nm ;
au moins une fibre optique photoconductrice à faible diffraction (54) avec une extrémité d'entrée (56) à couplage optique dans l'au moins une source lumineuse (52) et une extrémité de sortie (58), et étant configurée pour fournir la lumière reçue de l'au moins une source lumineuse (52) à l'extrémité de sortie (58) en tant que lumière guidée ; et
au moins une première fibre optique à diffusion de lumière (12) présentant un noyau de verre (20), une gaine (40) entourant le noyau (20), et une pluralité de structures nanométriques (32) situées au sein dudit noyau (20) ou à une limite entre gaine et noyau, comprenant en outre une surface extérieure (48), une extrémité d'entrée (62) et une extrémité de sortie (64), l'extrémité d'entrée (62) de l'au moins une fibre optique à diffusion de lumière (12) étant accouplée optiquement et de façon amovible avec l'extrémité de sortie (58) de l'au moins une fibre optique photoconductrice à faible diffraction (54), l'au moins une première fibre optique à diffusion de lumière (12) étant configurée pour recevoir la lumière guidée de la fibre optique photoconductrice à faible diffraction (54), et diffuser au moins une partie de ladite lumière guidée par le biais desdites structures nanométriques (32) dans le sens opposé au noyau de verre (20) et à travers la surface extérieure (48), pour former une première fibre optique à diffusion de lumière (12) émettrice possédant au moins une longueur continue L sur laquelle est émise en continu la lumière diffusée **caractérisé par le fait qu'**il comprend également :

au moins une deuxième fibre optique à diffusion de lumière (12a) présentant un noyau de verre (20), une gaine (40) entourant le noyau (20), et une pluralité de structures nanométriques (32) situées au sein dudit noyau (20) ou à une limite entre gaine et noyau, et comprenant en outre une surface extérieure (48), et une extrémité d'entrée (62a) accouplée optiquement avec l'extrémité de sortie (64) de l'au moins une fibre optique à diffusion de lumière (12), l'au moins une deuxième fibre optique à diffusion de lumière (12a) étant configurée pour recevoir une lumière guidée restante de l'au moins une fibre optique à diffusion de lumière (12), et diffuser au moins une partie de ladite lumière guidée restante par le biais desdites structures nanométriques (32) dans le sens opposé au noyau de verre (20) et à travers la surface extérieure (48), pour former une fibre optique à diffusion de lumière (12a) émettrice possédant au moins une longueur continue L sur laquelle est émise la lumière diffusée l'au moins une première fibre optique à diffusion de lumière (12) comprenant une ou plusieurs premières substances luminescentes pour convertir au moins une partie de la lumière guidée dans une ou plusieurs premières autres longueurs d'ondes ; et l'au moins une deuxième fibre optique à diffusion de lumière (12a) comprenant une ou plusieurs deuxièmes substances luminescentes pour convertir au moins une partie de la lumière guidée restante dans une ou plusieurs deuxièmes autres longueurs d'ondes.

2. Système d'éclairage selon la revendication 1, l'au moins une première fibre optique à diffusion de lumière (12) étant accouplée optiquement avec l'au moins une fibre optique photoconductrice à faible diffraction (54) par l'intermédiaire d'un connecteur (70) aux moitiés appariées (72,74), lesdites moitiés (72,74) s'enfichant mécaniquement l'une dans l'autre pour établir un couplage optique.

3. Système d'éclairage selon une quelconque des revendications 1 et 2, l'au moins une première fibre optique à diffusion de lumière (12) étant accouplée optiquement avec l'au moins une fibre optique photoconductrice à faible diffraction (54) par l'intermédiaire d'un accouplement optique à espace libre (60).

4. Système d'éclairage selon une quelconque des revendications 1 à 3, l'au moins une source lumineuse (52) ne générant que de la lumière ayant une ou plusieurs longueurs d'onde dans la plage de 500 nm ou moins.

5. Système d'éclairage selon une quelconque des revendications 1 à 4, l'au moins une deuxième fibre optique à diffusion de lumière (12a) étant accouplée de façon amovible avec l'au moins une fibre optique à diffusion de lumière (12).

6. Système d'éclairage selon une quelconque des revendications 1 à 5, comprenant au moins un filtre ou absorbeur (76) empêchant ou réduisant la propagation de la ou plusieurs premières autres longueurs d'ondes, accouplées optiquement avec au moins une extrémité (62,64) de l'au moins une première fibre optique à diffusion de lumière (12).

7. Système d'éclairage selon une quelconque des revendications 1 à 6, comprenant au moins une deuxième une fibre optique photoconductrice à faible diffraction (54a), dont une extrémité d'entrée (56a) est accouplée optiquement avec l'extrémité de sortie (64) de l'au moins une première fibre optique à diffusion de lumière (12), et possédant une extrémité de sortie (58a) accouplée optiquement avec l'extrémité d'entrée (62a) de l'au moins une deuxième fibre optique à diffusion de lumière (12a).

8. Système d'éclairage selon une quelconque des revendications 6 et 7, l'une ou plusieurs deuxièmes autres longueurs d'ondes se distinguant au moins en partie de l'une ou plusieurs premières autres longueurs d'ondes.

9. Système d'éclairage selon la revendication 7, comprenant au moins un filtre ou absorbeur optique (76) à ou entre l'extrémité de sortie (64) de l'au moins une première fibre optique à diffusion de lumière (12) et l'extrémité d'entrée (62a) de l'au moins une deuxième fibre optique à diffusion de lumière (12a), l'au moins un filtre ou absorbeur optique (76) étant configurés pour empêcher ou réduire la propagation de l'une ou plusieurs premières autres longueurs d'ondes de l'au moins une première fibre optique à diffusion de lumière (12) à l'au moins une deuxième fibre optique à diffusion de lumière (12a).

10. Système d'éclairage selon une quelconque des revendications 6 et 9, l'au moins un filtre ou absorbeur optique (76) comprenant un revêtement (78) sur une extrémité de l'au moins une première fibre optique à diffusion de lumière (12) ou sur la surface d'un autre composant optique accouplé optiquement avec une extrémité (62,64) de l'au moins une fibre optique à diffusion de lumière (12).

11. Système d'éclairage selon la revendication 10, le filtre ou absorbeur optique (76) étant un composant discret accouplé avec une extrémité de l'une ou plusieurs fibres optiques à diffusion de lumière.

**FIG. 1**

**FIG. 2**

FIG. 3A

**FIG. 3B**

**FIG. 3C**

**FIG. 4A**

**FIG. 4B**

**FIG. 5**

**FIG. 6**

**FIG. 7**

**FIG. 8**

**FIG. 9**

**FIG. 10**

**FIG. 11**

**FIG. 12**

**FIG. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010011299 A
- WO 2011063214 A

- US 583098 A